# EUROPEAN PATENT SPECIFICATION

(11) **EP 2 584 915 B1**
(45) Date of publication and mention of the grant of the patent: **12.08.2015**
(21) Application number: 11738820.7
(22) Date of filing: 24.06.2011
(51) Int. Cl.: A23L 1/00, A23L 1/22, A61K 9/127, A61K 9/16, A61K 9/107, A23L 2/39, A23L 1/035

(54) **INGREDIENT DELIVERY SYSTEM**
SYSTEM ZUR FREISETZUNG VON INHALTSSTOFFEN
SYSTÈME DE DISTRIBUTION DE COMPOSANT

(30) Priority: 25.06.2010 EP 10167262
(43) Date of publication of application: 01.05.2013
(73) Proprietor: Firmenich SA, 1211 Geneva 8 (CH)
(72) Inventor: TCHAKALOVA, Vera, CH-1211 Geneva 8 (CH); HAFNER, Valeria, CH-1211 Geneva 8 (CH); GAUTIER, Antoine, CH-1211 Geneva 8 (CH)
(74) Representative: Carina, Riccardo Filippo
(86) International application number: PCT/IB2011/052795
(87) International publication number: WO 2011/161658

(56) References cited:
- WO-A1-95/33448
- WO-A2-2010/014666
- JP-A- 2006 304 665
- US-A- 5 139 803
- US-A1- 2009 196 972

## Description

### Technical field

The present invention relates to the flavor industry. It concerns more particularly an ingredient delivery system comprising surfactant aggregates encapsulating a taste modifying ingredient. The invention also relates to the use of the delivery system.

### Background of the Invention

Solid and liquid compositions comprising the compound having the structure: 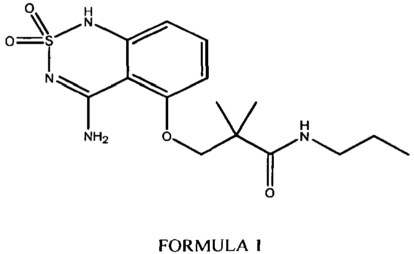 or salts, and/or solvates thereof (the compound according to formula 1, its salts and its solvates collectively referred to as "compound 1") are known for providing sweetness enhancement, particularly for enhancing the sweetness of sucrose. It is a solid at room temperature.

For instance, WO 2010/014666 discloses such a compound as well as its method of manufacture, and compositions comprising such a compound.

However, the compound is known to be sensitive to ultra violet radiation and so may not be suitable for use in food and beverage applications where there is exposure upon storage to sunlight. This is a particular problem in beverages and other edible products where compound 1 is present in a solution and the packaging is transparent or at least translucent. Under such conditions, it has been observed that the compound according to formula 1 can be unstable and so may not suitable for such products when an extended shelf-life is required.

The present invention seeks to address this issue.

The prior art addresses the stability of other materials using a number of approaches. For instance US-A1-2009/196972 describes a food emulsion in the form of a nanoemulsion for encapsulating flavorant compositions. The amount of surfactant present is at least 20wt% and, in paragraph 16, an embodiment is described where the ratio of flavor to surfactant is from 1:5 to 1:12. It would be desirable to avoid such high levels of surfactant. JP-A-2006/304665 describes a foaming oil-in-water emulsion for food exposed to light. It would be desirable to avoid foaming emulsions, especially for end applications, such as certain beverages, where foaming may be highly undesirable. WO-A1-95/33448 refers to the stabilization of photosensitive materials that are retained within liposomes by the addition of light absorbing agents. Similarly, US5139803 relates to stable liposomes prepared by dissolving a lipophilic material in a phospholipid. However, to the best of our knowledge, lipids and liposomes do not improve the photostability of the compound according to formula (I).

Accordingly, there remains a need to provide a stable delivery system for the compound according to formula (I).

### Brief Summary of the Invention

Thus, according to the present invention, there is provided a delivery system according to claim 1.

The invention further provides the use of the aforementioned delivery system to improve the photostability of the compound according to formula (1).

The invention also provides a foodstuff or beverage comprising the aforementioned delivery system.

### Detailed Description of the Invention

The delivery system according to the present invention is composed of a structure comprising surfactant aggregates comprising, at least, a surfactant together with water and/or a water-soluble solvent. By "surfactant aggregates", it is meant that the surfactant molecules are self-assembled into structures with defined architectures so as to minimize the energetically unfavorable contact of part of the surfactant molecules with the water and/or water soluble solvent.

Preferred surfactant aggregates according to the present invention include micelles and vesicles. Most preferred are micelles.

The structure of the surfactant aggregates can be spherical, disc-like, globular or rod-like (cylindrical). Preferably the surfactant aggregates are rod-like.

In order to form the aggregates according to the invention, it is important that the one or more surfactants is present in an amount greater than the critical micelle concentration. Critical micelle concentration is abbreviated herein as "CMC".

At this level, the photoprotection afforded to the compound according to formula (1) is significantly enhanced. Without wishing to be bound by theory, in a simple surfactant, water and/or water soluble solvent system, it is believed that the protection of compound 1 against photodegradation depends on the surfactant concentration and below the CMC of surfactant all molecules of the compound according to formula (1) are susceptible to degradation. Thus, only those molecules that are included within the surfactant aggregates (e.g. micelles), or that are at the interface of the surfactant aggregates and the hydrophilic phase are protected against degradation.

The CMC is a well known value for surfactants and is easily measured. Lists of CMC's are also available in many publications. A particularly relevant publication is Mukerjee, P., Mysels, K. J. Critical Micelle concentrations of Aqueous Surfactant System; NSRDS-NBS 36, US, Government Printing Office: Washington, DC, 1971, which lists the CMC of 720 compounds.

For the purposes of the present invention, the surfactant system compises Polysorbates such as Polysorbate 80 (polyoxyethylene (20) sorbitan monooleate, commercially available as Tween80®, ex AP Chemicals Ltd, UK).

The surfactant is present in an amount of from 1 to 20% by weight, based on the total weight of the delivery system, more preferably less than 18wt% and most preferably less than 15wt%. The avoidance of high levels of surfactant is desirable for food-based applications and yet it is surprising that such low levels of surfactant are capable of protecting the compound according to formula (1) against photo-degradation, especially since the prior art typically teaches that higher levels of surfactant are necessary.

Surprisingly, it is found that cationic and anionic surfactants are not suitable for improving the photostability of the compound according to formula (1). Thus, the delivery system is free of such surfactants.

Furthermore, it is surprisingly found that lipid and phospholipid surfactants (e.g. lecithin) do not improve the protection against photodegradation of the compound according to formula (1), and they may even, when used in combination with a nonionic surfactant as described above, reduce the protection compared to when such a nonionic surfactant is used alone. Therefore, even though they may be present for other purposes, their presence as part of the delivery system is not beneficial for the purpose of improving photostability.

The delivery system comprises a continuous phase and a dispersed phase. In the excess of water and/or water-soluble solvent, the surfactant aggregates and any hydrophobic components form the dispersed phase whereas in an excess of the more hydrophobic components, the water and/or water soluble solvent would be included in the dispersed phase. Nevertheless, the continuous phase is preferably a hydrophilic phase formed of water and/or a water-soluble solvent. In such delivery systems, the hydrophilic phase, which may also be referred to herein as the aqueous phase, preferably comprises at least 50% by weight of the delivery system.

The aqueous phase of the delivery system may comprise water together with a water-soluble solvent. Alternatively, it may comprise the water soluble solvent alone. In the context of the present invention, the phrase "water soluble solvent" embraces both a single solvent as well as mixture of two or more water soluble solvents.

Preferred water soluble solvents for use in the present invention include polyalcohols selected from the group consisting of propylene glycol, mono- and disaccharide sugars and sugar alcohols, such as sorbitol, xylitol, mannitol and glycerol, and mixtures thereof.

More preferably, the water soluble solvent is propylene glycol, glycerin (glycerol) and mixtures thereof.

Whilst it is preferred to maximise the amount of compound 1 that is encapsulated within the surfactant aggregates or at the surface of the aggregate and the hydrophilic phase, a proportion of compound 1 may nevertheless remain outside the surfactant aggregates in the continuous phase. Thus, where the hydrophilic phase forms the continuous phase, it is advantageous if the delivery system further comprises a water soluble component that protects compound 1 in the continuous phase.

A suitable component for protecting compound 1 in the continuous phase is an acid. Preferred acids include those selected from the group consisting of ascorbic acid, citric acid, phosphoric acid or mixtures thereof. Citric acid and phosphoric acid are found to be particularly effective at low pH typical of carbonated soft drinks. Ascorbic acid, is also found to be effective at higher pH values and so enables compound 1 to be stable upon storage in a wide range of applications. Accordingly, one or more of such acids is preferably present as part of the delivery system.

Compound 1 is preferably present in an amount of from 0.0001 to 5%, more preferably 0.2 to 2%, even more preferably 0.3 to 1.8%, by weight based on to the weight of the delivery system.

Compound 1, which is a solid material at room temperature typically in the form of a powder, and its method of manufacture are described in publication WO-A2-2010/014666 (Senomyx, Inc) from page 29 line 25 to pages 48 line 27.

Where more than 0.3% by weight, based on the total weight of the delivery system, of compound 1 is present in the delivery system, it is advantageous to provide a component in the delivery system that increases the pH. For instance, a basic component, such as sodium bicarbonate may be present. The pH-increasing agent is found to substantially improve the solubility of compound 1, when the latter is present at such elevated levels.

The delivery system may be in the form of an emulsion or microemulsion. More preferably the delivery system is in the form of a microemulsion. Therefore, it is preferred that an oil is also present as part of the delivery system. Nevertheless, in the event that the delivery system is in the form of an emulsion it is extremely desirable that it is not a foaming emulsion since the presence of a foam is unacceptable for a multitude of food and beverage applications, especially certain beverage applications.

Where the delivery system comprises an oil, such as a flavor oil, mixing of the surfactant, the hydrophilic phase and the oil phase in relative amounts, known to the skilled person in the art, provides a microemulsion instantaneously.

The delivery system is preferably clear. By "clear", it is meant a delivery system that presents a turbidity preferably comprised between 0 and 20 NTU, when measured between 400 and 600 nm in a 2.5 cm cell at 25°C.

Preferably, any oil is present in an amount of less than 30% by weight based on the total weight of the delivery system.

When the delivery system is in the form of a microemulsion, the amount of the continuous phase is preferably more than 50% by weight, based on the total weight of the delivery system. On the other hand, in the absence of an oily phase, the delivery system does not consist of a microemulsion, and the amount of the continuous phase may exceed 70% by weight, based on the total weight of the delivery system.

Specific examples of oils which may be used alone or in admixture in the delivery system of the invention include natural extracts of fruits or plants such as lemon, strawberry, blueberry or other berries, hazelnut, cola, banana, punch, peach, lime, orange, grapefruit, vanilla, tea, tangerine, mandarin, kumquat, bergamot oil or any mixture thereof. Of course, other oils not mentioned here may also be used in the delivery system according to the needs of the skilled flavorist.

A suitable method for preparing a delivery system according to the invention may be as follows.

Firstly, a continuous phase is prepared by mixing together water, a polyhydric alcohol and surfactant and, if necessary, heating the mixture up to 50°C. Compound 1, optionally together with a pH increasing component, such as sodium bicarbonate, are then added under gentle stirring, to provide a clear dispersion. After the complete solubilisation of compound 1, the dispersion is cooled to room temperature and the oil-phase component is added. The turbid solution is gently stirred to form, spontaneously, a clear microemulsion.

An alternative method for preparing a delivery system according to the invention comprises adding compound 1 to a mixture of water and surfactant(s), optionally in the presence of a pH-increasing agent, such as sodium bicarbonate, sodium citrate or sodium hydroxide, and, if necessary, heating the solution to 50°C to achieve solubilisation of compound 1. In this process, it is important that the surfactant is present in an amount exceeding the CMC.

The delivery system may be further encapsulated. For instance, the delivery system may be extruded. By "extruded", it is meant here methods which typically rely on the use of carbohydrate matrix materials which are heated to a molten state and combined with an active ingredient, before extruding and quenching the extruded mass to form a glass which protects said ingredient. A great deal of prior art describes extrusion techniques, including US 3,704,137, US 4,707,367, US 4,610,890, WO 99/27798, US 4,977,934 and EP 202409 which are all hereby included by reference, and a more detailed description of such extrusion methods is not warranted since the skilled person in this field is well aware of such techniques and how to perform them.

Alternatively, the delivery system may be spray-dried, entrapping the delivery system as liquid droplets in a solidified matrix of a dehydrated carrier, generally consisting of carbohydrates, such as starches, hydrolyzed starches (maltodextrin), chemically modified starches, emulsifying polymers (gum Arabic) and in certain instances monomers and dimers of simple aldohexoses, or any combination thereof. Conventional spray-drying techniques are perfectly well documented in the prior art. See for example Spray-Drying Handbook, 4th ed., K. Masters, (1985) or other reference books on the subject-matter.

The invention will now be illustrated by way of the following examples but is not limited to these examples. Temperatures are given in degrees centigrade and the abbreviations have the meaning common in the art.

### Examples

### Example 1

### Preparation of delivery systems according to the invention

A continuous phase of a microemulsion was prepared by mixing water, propylene glycol and surfactant. This mixture was heated to 50°C and then powdered compound 1 prepared according to the method given in WO-A2-2010/014666 (Senomyx, Inc), page 29 line 25 to pages 48 line 27, and sodium bicarbonate were mixed and added to the heated continuous phase to form a solution. The resulting mixture was stirred gently until compound 1 was fully solubilised. The solution was cooled to room temperature and various microemulsions were then formed by addition of the different flavors referred to below (each flavor being used to create a separate microemulsion). Under gentle stirring, the solutions became completely transparent microemulsions. All amounts are given in the following table.

**Table 1**

| Ingredient | Concentration %w/w | | | |
|---|---|---|---|---|
| | Group A | Group A' | Group B | Group B' |
| Propylene glycol | 51.5 | 51.5 | 42 | 42 |
| Water | 14 | 12.5 | 14 | 12.5 |
| NaHCO3 | 0.5 | 0.5 | 0.5 | 0.5 |
| Compound 1 | 0.5 | 2 | 0.5 | 2 |
| Polysorbate 80 (1) | 8.5 | 8.5 | 18 | 18 |
| Flavor (2) | 25 | 25 | 25 | 25 |
| Total | 100 | 100 | 100 | 100 |

| | | | | |
|---|---|---|---|---|
| (1) ex Acros Organics, USA (2) ex Firmenich, Switzerland | | | | |

All flavours are available from Firmenich, Switzerland. The reference codes are in brackets after the name of each flavor.

Group A and A' flavors: Strawberry (052312A), Blueberry A (504253A), Hazelnut (502866A), Cola (052118 T7), Banana (885043), Vanilla (555370T), Punch (765640 01 NA), Peach (504021T), Tea (596720T).

Group B and B' flavors: Lemon (540374T), Orange (540320 TJP).

### Example 2

### Preparation of further delivery systems according to the invention

Four microemulsion delivery systems comprising ingredients in the amount shown in the following table were prepared.

**Table 2**

| Ingredient | Concentration %w/w |
|---|---|
| Propylene glycol | 44.7 |
| Water | 10.6 |
| Polysorbate 80 | 14.9 |
| Lecithin (1) | 1.89 |
| Citrem (2) | 2.79 |
| Compound 1 | 0.15 |
| Flavor (3) | 25 |
| Total | 100 |

| | |
|---|---|
| (1) ex Firmenich, Switzerland (code 954430) (2) ex Danisco A/S, Denmark (3) Limette Tahiti (955356) - microemulsion 1 N&A Grapefruit (052981A) - microemulsion 2 Limonene (955430) - microemulsion 3 Citronova 533 Orange Fab (926477), - microemulsion 4, all ex Firmenich, Switzerland. | |

Each delivery system was prepared by firstly mixing water, compound 1, propylene glycol, and a water-soluble surfactant to form a continuous phase of a microemulsion. Oil phases were then prepared by mixing various flavors and the oil-soluble surfactants (lecithin and citrem). Finally each oil phase was separately added to the continuous aqueous phase with gentle stirring to form various microemulsions. The microemulsions were prepared at room temperature and all amounts are given in the table below.

### Example 3

### Physical Stability of Delivery System at different temperatures

The shelf-life stability of microemulsions prepared in example 1 was studied at different temperatures. The microemulsions were considered as "stable" if there was no phase separation occurring and they kept their homogeneity and transparence.

**Table 3**

| Flavor | Temperature = 4°C | Temperature = 25° |
|---|---|---|
| Lemon | stable | stable |
| Cola | stable | stable |
| Tea | stable | stable |
| Strawberry | stable | stable |
| Blueberry | stable | stable |
| Vanilla | stable | stable |
| Hazelnut | stable | stable |
| Banana | stable | stable |
| Peach | stable | stable |
| Punch | stable | stable |

### Example 4

### Photostability Studies

The photostability of compound 1 under UV irradiation was studied as follows.

The sample to be irradiated was introduced into a transparent glass bottle, placed on a plate and then subjected to irradiation with a xenon lamp (Xenon lamp Suntest XLS+, Atlas Material Testing Technology LLC). The lamp was set to 650 W/m², the temperature was kept constant at 45°C and the plate was turned slowly in order to assure homogeneous UV-exposure of the entire sample. After a fixed interval, the sample was removed and the content of compound 1 remaining was measured by HPLC and Fluorimetry.

### HPLC/UV-DAD Measurement

Firstly, a standard solution containing 26.44 mg caffeine in 11 LC-MS grade methanol was prepared. For samples containing 10 ppm of compound 1, the sample was placed in a vial, diluted to 500 µl and 50 µl of the standard solution was added; for samples containing 25 ppm of compound 1, the sample was placed in a vial, diluted to 400 µl and 200 µl of the standard solution was added. Each vial was protected from exposure to light by being wrapped in aluminium foil.

The relative content of compound 1 in irradiated samples was calculated against the nonirradiated reference (set at 100%) using an Agilent Technologies 1200 series HPLC equipped with a degasser G1379B, a binary pump G1312B (large-volume mixer was by-passed), a well-plate high performance autosampler G1367D, a thermostatted column compartment G1316B and a UV (DAD) detector G1315C. The column (ZORBAX Eclipse Plus C18 600Bar 2.1 x 100mm, 1.8µm (#959764-902) was set at 60°C ± 0.1 °C. Two solvents were used: Solvent "A" was formic acid 0.1% in water, ULC/MS, Biosolve (ready-mix cat.# 23244102); solvent "B" was formic acid 0.1% in acetonitrile, ULC/MS, Biosolve (ready-mix cat.# 01934125). The solvent flow rate was 0.500 ml/min; Injection: 2 µl.
Solvent gradient:
0 min -1 min: 95% A
1 min - 8 min: 95% A a 100% B
8 min -10 min: 100% B
10 min - 12 min: 100% B a 95% A
Post-equilibration 1 min

Detector: UV-DAD:

| | |
|---|---|
| Caffeine (internal standard): | signal 273nm, Bw 16 |
| Compound 1: | signal 264nm, Bw 8 |
| | signal 230nm, Bw 8 |

The signal at 264 nm was used for the quantification calculations.

### Fluorimetry Measurement

The sample to be studied was placed in quartz cell (width 1cm). Fluorescence was detected at an angle 90° to the incident exciting beam using a Fluorolog-3 spectrofluorometer (Model FL3-22, Jobin Yvon-Spex Instruments SA, Inc). The source of light was a xenon lamp set at 450W (the strength of the lamp was verified to ensure that it did not provoke additional degradation of the compound according to formula (1)). Excitation and emission spectra of each sample were provided.

For calibration, the excitation and emission spectra of compound 1 solutions were measured before and after irradiation. The intensity of the emission maximum of the unirradiated solution was given the value as 100%. The ratio between the intensities of emission maxima of irradiated and unirradiated samples was measured and the results calculated as a percentage.

### Example 4a

### Photostability of compound 1 over time

Solutions of 25 ppm of compound 1 were prepared in water and irradiated as described above. The amount of compound 1 remaining at various intervals was measured. The results are given in the table below.

**Table 4**

| | HPLC | Fluorimetry |
|---|---|---|
| Time of irradiation, min | % remaining | % remaining |
| 0 | 100 | 100 |
| 5 | 79.7 | 91.3 |
| 10 | 62.2 | 78.5 |
| 20 | 46.3 | 52.2 |
| 30 | 32.3 | 38.7 |
| 45 | 24.8 | 27.8 |
| 60 | 18.7 | 21.3 |
| 90 | 6.9 | 16.2 |
| 120 | 0 | 12.7 |
| 180 | 0 | 6.4 |

### Example 4b

### Effect of concentration of compound 1 on photodegradation kinetics

The kinetics of degradation was measured using HPLC for different concentrations of compound 1 in water. Complete degradation was considered to occur when % remaining reached 0.

**Table 5**

| Initial concentration, ppm | Time for complete degradation, min |
|---|---|
| 5 | 45 |
| 10 | 60 |
| 15 | 90 |
| 25 | 120 |
| 40 | >180 |

### Example 5

### Stability of delivery system exposed to UV radiation

A hazelnut flavoured microemulsion was prepared according to example 1, group A. The microemulsion was then diluted 1000-fold with water in order to obtain a final concentration of compound 1 of 5 ppm. This is referred to as sample 1.

A comparative sample (sample A) was prepared containing propylene glycol, water and compound 1 in the same proportions as in the microemulsions of example 1. The samples were irradiated for 45 minutes. The concentrations of compound 1 remaining were measured by fluorimetry. The results are shown in the table below.

**Table 6**

| Sample | Compound 1 (% remaining) |
|---|---|
| A | 3.6 |
| 1 | 23.8 |

### Example 6

### Effect of varying surfactant concentration

The effect of surfactant concentration on the protection of compound 1 was studied using Polysorbate 80. Solutions were prepared by mixing water, Polysorbate 80 and compound 1 at the quantity necessary to obtain the surfactant concentrations shown in the table below and a concentration of 25 ppm of compound 1.

The solutions were prepared initially in dark bottles, covered by aluminum and were stirred under heating at 50°C until compound 1 was fully solubilised. After cooling to room temperature, a fixed volume of each solution was transferred to transparent, clear glass bottles and immediately irradiated for 120 min. The level of protection of compound 1 molecules against UV-irradiation, expressed as the concentration of compound 1 was analysed by HLPC. The results are given in the table below.

**Table 7**

| Polysorbate 80 concentration, % w/w | % remaining (compound 1) |
|---|---|
| 0.0001572 | 0 |
| 0.0002145 | 0 |
| 0.001572 | 0 |
| 0.008 | 0 |
| 0.01 | 0 |
| 0.05 | 6.55 |
| 0.1 | 6.81 |
| 0.5 | 12.97 |
| 1 | 22.24 |
| 4 | 47 |
| 8.5 | 88.57 |
| 15 | 97.03 |

The CMC of Polysorbate 80 in water was measured using the Pendant drop method. A CMC value of 0.01wt% Tween80 was obtained. Thus, the results demonstrate that the surfactant must be present at a level above its CMC.

### Example 7

### Effect of combining surfactant aggregates and continuous phase protection agent

Various aqueous solutions comprising 25 ppm of compound 1 and either surfactant or a surfactant/antioxidant-acid mixture in the amounts shown in the following table were prepared by simple mixing.

**Table 8**

| Ingredient | Sample | Sample 2 | Sample 3 | Sample 4 | Sample 5 | Sample 6 |
|---|---|---|---|---|---|---|
| Polysorbate 80 | 40g | 40g | 40g | 40g | 40g | 40g |
| Ascorbic acid | - | 0.0011mo l | 0.011mol | - | - | - |
| Salicylic acid | - | - | - | 0.0015mol | - | - |
| Citric acid | - | - | - | - | 0.02 mol | - |
| Phosphoric acid | - | - | - | - | - | 0.0061 mol |
| Compound 1 | 25ppm | 25ppm | 25ppm | 25ppm | 25ppm | 25ppm |
| Water | 1 litre | 1 litre | 1 litre | 1 litre | 1 litre | 1 litre |

The samples were irradiated for 120 minutes and the percentage remaining of compound 1 was analyses by HPLC. The results were as follows:

**Table 9**

| Sample | % remaining |
|---|---|
| 1 | 40 |
| 2 | 90 |
| 3 | 73 |
| 4 | 85 |
| 5 | 84 |
| 6 | 85 |

### Example 8

### Effect of Varying Surfactant

The samples were prepared using the method described in Example 6. The concentration of compound 1 was equal to 25ppm. In the solutions containing surfactant mixtures, the concentration of surfactant I is 4%wt and the concentration of surfactant II is as shown in Table 10.

**Table 10**

| Sample | Surfactant I | Surfactant II | Concentration surfactant II [% wt] | Additives | Protection [%] |
|---|---|---|---|---|---|
| 1 | Polysorbate 80 | - | - | | 47 |
| 2 | Polysorbate 80 | Polysorbate 65 (1) | 0.5 | - | 61.37 |
| 3 | Polysorbate 80 | Polysorbate 85 (2) | 0.5 | - | 35.98 |
| 4 | SDS (3) | - | - | - | 0 |
| 5 | SDS | - | - | 0.5% NaCl | 0 |
| 6 | Polysorbate 80 | DMPG (4) | 0.5 | - | 29.02 |
| 7 | Polysorbate 80 | Lecithin | 0.64 | - | 57.52 |
| 8 | Polysorbate 80 | Ethanol | 3 | | 53.95 |
| 9 | Polysorbate 80 | - | - | 0.4mol/l K-Citrate | 65.96 |
| 10 | Q-Naturale (5) | - | 4 | - | 86.14 |
| 11 | Polysorbate 80 | DOPE (6) | 0.5 | - | 35.53 |
| 12 | Polysorbate 80 | SSL (7) | 0.5 | - | 40.35 |
| 13 | CTAB (8) | - | - | - | 0.31 |
| 14 | Plantacare 2000 (9) | - | - | - | 5.80 |
| 15 | Plantacare 1200 (10) | - | - | - | 3.30 |
| 16 | Tomadol L144 (11) | - | - | - | 13.60 |
| 17 | Habo Monoester P90 (12) | - | - | - | 8.60 |

| | | | | | |
|---|---|---|---|---|---|
| (1) ex Sigma-Aldrich, Switzerland (2) ex Sigma-Aldrich, Switzerland (3) Sodium dodecyl sulphate (SDS); ex Sigma-Aldrich, Germany (4) 1,2-Dimyristoyl-*sn*-Glycero-3-PhosphoGlycerol; ex Avanti Polar Lipids, USA (5) ex National Starch Food Innovation, Germany (6) 1,2-dioleoyl-*sn*-glycero-3-phosphoethanolamine; ex Avanti Polar Lipids, USA (7) Sodium stearoyl lactylate; ex Danisco (8) Cetyl trimethylammonium bromide; ex Sigma-Aldrich, Switzerland (9) Decyl Glucoside ; ex Cognis, Germany (10) Lauryl Glucoside ; ex Cognis, Germany (11) C10-16 ethoxylated alcohol; ex Air Products and Chemicals, USA (12) Sucrose palmitate; ex Compass Foods, Singapore | | | | | |

The results show clearly that the presence of an anionic and cationic surfactants (SDS and CTAB) provide little or no photodegradation protection.

### Example 9

### Evaluation in a Powdered Soft Drink

The powdered soft drink preparations in the following table were prepared by mixing the powered ingredients, and then dissolving them in water (1 litre). Next, for samples 1, 2 and 3, compound 1 was added at 10 ppm with gentle stirring until completely solubilised. For samples 4, 5 and 6, the microemulsion was added in quantity necessary to obtain a final concentration of 10 ppm of compound 1. The amounts shown in the following table are grams, except where indicated.

**Table 11**

| | Sample 1 | Sample 2 | Sample 3 | Sample 4 | Sample 5 | Sample 6 |
|---|---|---|---|---|---|---|
| Sucrose | 59.615 | 59.615 | 59.615 | 59.615 | 59.615 | 59.615 |
| Citric acid | 4 | 3.9 | 3.85 | 4 | 3.9 | 3.85 |
| Tricalcium Phosphate | 0.3 | 0.3 | 0.3 | 0.3 | 0.3 | 0.3 |
| Trisodium Citrate | 0.3 | 0.3 | 0.3 | 0.3 | 0.3 | 0.3 |
| Cellulose gum Type 7MF | 0.5 | 0.5 | 0.5 | 0.5 | 0.5 | 0.5 |
| Ascorbic acid | 0 | 0.2 | 0.3 | 0 | 0.2 | 0.3 |
| Solessence® P Orange (1) | 0.04 | 0.04 | 0.04 | - | - | - |
| Microemulsion (2) | - | - | - | Added in an amount to provide 10ppm of Compound 1 | | |

| | | | | | | |
|---|---|---|---|---|---|---|
| (1) ex Firmenich, Switzerland, reference 540319 TP0345. (2) propylene glycol (75.5wt%), water (13.5wt%), NaHCO3 (0.5wt%), Compound 1 (1wt%), Polysorbate 80 (8.5wt%), Orange 540320TJP (1wt%) - mixed with gentle stirring | | | | | | |

The beverages were then irradiated for 60 minutes and the % remaining of compound 1 was analyzed by HLPC. The results are given in the following table:

**Table 12**

| Sample | 1 | 2 | 3 | 4 | 5 | 6 |
|---|---|---|---|---|---|---|
| % remaining (compound 1) | 87.9 | 94.3 | 61.5 | 92.7 | 81.7 | 52.4 |

The results show that the compound according to formula (I) is protected by the delivery systems.

## Claims

1. A delivery system having a structure comprising surfactant aggregates, the delivery system comprising:
a) a surfactant system comprising a polysorbate, the surfactant is present in an amount, based on the total weight of the delivery system, of from 1 to less than 20wt% and further being present in an amount equal to or greater than its critical micelle concentration wherein the delivery system is free of cationic and anionic surfactants,
b) 10% or more by weight, based on the total weight of the delivery system, of a hydrophilic phase formed of water and/or a water-soluble solvent,
c) from 0.0001 to 5% by weight, based on the total weight of the delivery system, of a compound having the structure 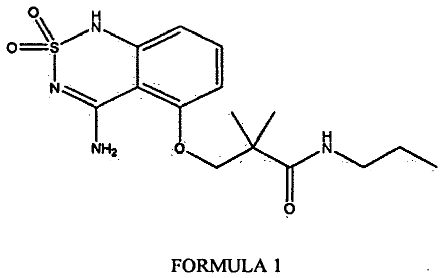
or salts, and/or solvates thereof ("compound 1")
wherein at least a proportion of compound 1 is encapsulated within the surfactant aggregates.

2. A delivery system according to claim 1 wherein the surfactant aggregates are vesicles and/or micelles.

3. A delivery system according to claim 2 wherein the surfactant aggregates are micelles.

4. A delivery system according to any one of the preceding claims further comprising a continuous phase protecting component for compound 1.

5. A delivery system according to claim 4 wherein continuos phase protecting agent comprises ascorbic acid.

6. A delivery system according to claim 4 or claim 5 wherein continuous phase protecting agent comprises citric acid, phosphoric acid or mixtures thereof.

7. A delivery system according to claim 1, wherein compound 1 is present in an amount of from preferably 0.2 to 2%, by weight based on to the weight of the delivery system.

8. A delivery system according to any one of claims 1 to 3, comprising more than 20% by weight of water, based on the total weight of the delivery system.

9. A delivery system according to any one of the preceding claims further comprising a basic compound.

10. Use of the delivery system as claimed in any one of the preceding claims to improve the photostability of compound 1.

11. A foodstuff or beverage comprising the delivery system according to any one of claims 1 to 9.

## Patentansprüche

1. Abgabesystem mit einer Tensidaggregate umfassenden Struktur, wobei das Abgabesystem umfasst:
a) ein Tensidsystem, umfassend ein Polysorbat, wobei das Tensid in einer Menge, bezogen auf das Gesamtgewicht des Abgabesystems, von 1 bis weniger als 20 Gew.-% vorhanden ist und weiterhin in einer Menge vorhanden ist, die genauso groß wie oder größer als seine kritische Mizellenkonzentration ist, wobei das Abgabesystem frei von kationischen und anionischen Tensiden ist,
b) 10 Gew.-% oder mehr, bezogen auf das Gesamtgewicht des Abgabesystems, von einer hydrophilen Phase, die aus Wasser und/oder einem wasserlöslichen Lösungsmittel gebildet wird,
c) 0,0001 bis 5 Gew.-%, bezogen auf das Gesamtgewicht des Abgabesystems, von einer Verbindung mit der Struktur 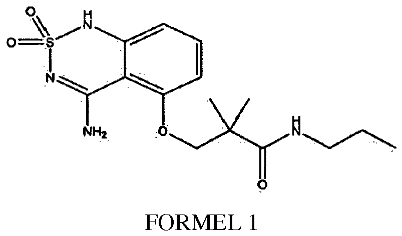
oder Salzen und/oder Solvaten davon ("Verbindung 1"),
wobei zumindest ein Teil von Verbindung 1 innerhalb der Tensidaggregate eingekapselt ist.

2. Abgabesystem nach Anspruch 1, wobei die Tensidaggregate Vesikel und/oder Mizellen sind.

3. Abgabesystem nach Anspruch 2, wobei die Tensidaggregate Mizellen sind.

4. Abgabesystem nach einem der vorstehenden Ansprüche, das weiterhin eine Kontinuierliche-Phase-Schutzkomponente für Verbindung 1 umfasst.

5. Abgabesystem nach Anspruch 4, wobei das Kontinuierliche-Phase-Schutzmittel Ascorbinsäure umfasst.

6. Abgabesystem nach Anspruch 4 oder Anspruch 5, wobei das Kontinuierliche-Phase-Schutzmittel Zitronensäure, Phosphorsäure oder Mischungen davon umfasst.

7. Abgabesystem nach Anspruch 1, wobei Verbindung 1 in einer Menge von bevorzugt 0,2 bis 2 Gew.-%, bezogen auf das Gewicht des Abgabesystems, vorhanden ist.

8. Abgabesystem nach einem der Ansprüche 1 bis 3, umfassend mehr als 20 Gew.-% Wasser, bezogen auf das Gesamtgewicht des Abgabesystems.

9. Abgabesystem nach einem der vorstehenden Ansprüche, das weiterhin eine basische Verbindung umfasst.

10. Verwendung des Abgabesystems nach einem der vorstehenden Ansprüche, um die Photostabilität von Verbindung 1 zu verbessern.

11. Lebensmittel oder Getränk, umfassend das Abgabesystem nach einem der Ansprüche 1 bis 9.

## Revendications

1. Système de relargage ayant une structure comprenant des agrégats de tensioactif, le système de relargage comprenant:
a) un système de tensioactif comprenant un polysorbate, le tensioactif est présent en une quantité basée sur le poids total du système de relargage, de 1 à moins de 20 % en poids et étant en outre présent en une quantité égale ou supérieure à sa concentration critique de micelles, où le système de relargage est exempt de tensioactifs cationiques et anioniques,
b) 10 % en poids ou plus, sur la base du poids total du système de relargage, d'une phase hydrophile formée d'eau et/ou d'un solvant soluble dans l'eau,
c) de 0,0001 à 5 % en poids, sur la base du poids total du système de relargage, d'un composé ayant la structure 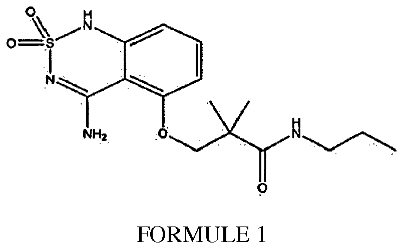
ou des sels et/ou des solvates de celui-ci ("composé 1")
dans lequel au moins une proportion du composé 1 est encapsulée dans les agrégats de tensioactif.

2. Système de relargage selon la revendication 1, dans lequel les agrégats de tensioactif sont des vésicules et/ou des micelles.

3. Système de relargage selon la revendication 2, dans lequel les agrégats de tensioactif sont des micelles.

4. Système de relargage selon l'une quelconque des revendications précédentes, comprenant en outre un composant protecteur de phase continue pour le composé 1.

5. Système de relargage selon la revendication 4, dans lequel l'agent protecteur de phase continue comprend de l'acide ascorbique.

6. Système de relargage selon la revendication 4 ou la revendication 5, dans lequel l'agent protecteur de phase continue comprend de l'acide citrique, de l'acide phosphorique ou des mélanges de ceux-ci.

7. Système de relargage selon la revendication 1, dans lequel le composé 1 est présent en une quantité de préférablement 0,2 à 2 % en poids sur la base du poids du système de relargage.

8. Système de relargage selon l'une quelconque des revendications 1 à 3, comprenant plus de 20 % en poids d'eau, sur la base du poids total du système de relargage.

9. Système de relargage selon l'une quelconque des revendications précédentes comprenant en outre un composé basique.

10. Utilisation du système de relargage selon l'une quelconque des revendications précédentes pour améliorer la photostabilité du composé 1.

11. Produit alimentaire ou boisson comprenant le système de relargage selon l'une quelconque des revendications 1 à 9.
